# EUROPEAN PATENT APPLICATION

(11) **EP 1 586 855 A1**
(43) Date of publication of application: **19.10.2005**
(21) Application number: 04405235.5
(22) Date of filing: 15.04.2004
(51) Int. Cl.: G01B 11/00, G01D 5/26

(54) **A method and device for imaging measurement**

(71) Applicant: EMPA Eidgenössische Materialprüfungs- und Forschungsanstalt, CH-8600 Dübendorf (CH)
(72) Inventor: Dias-Lalcaca, Peter Gabriel, 8633 Wolfhausen (CH); Hack, Erwin, 8610 Uster (CH)
(74) Representative: Clerc, Natalia

(57) **Abstract**

A method for imaging measurement comprises the steps of
- illuminating an object to be measured through a combination of imaging fibre bundles,
- transferring an optical image of said object through said combination of imaging fibre bundles from said object to at least one optical detection means and
- analyzing the optical image received in the at least one optical detection means, and is characterized in that
the same fibre bundles are used for illuminating said object and transferring the optical image of said object. This method enables the construction of small and rather inexpensive measurement devices.

## Description

### Field of the invention

The invention relates to a method and a device for imaging measurement according to the preamble of claims 1 and 11 respectively.

### Background of the invention

Optical imaging measurement systems frequently have to solve one or more of the following problems:
- Different partial views of an object have to be measured at the same time
- The object to be measured is located at a place which is difficult to accesss
- The object to be measured has a different size and aspect ratio than the detection plane of the camera used
- The object to be measured has to be illuminated, for example with incoherent light for visual detection or with coherent, e.g. laser light, for interferometric or fluorescence measurements.

It is known in the state of the art to solve at least some of these problems by using optical fibre bundles.

EP-A-0'233'156 shows an optical fibre scanning device for the formation of television images using a bundle of optical fibres.

EP-A-0'286'393 describes an imaging system for checking transportation containers.

The imaging system comprises detecting means operable to emit light in response to incident radiation. It further comprises a bundle of optical fibres being regrouped so that the aspect ratios of their input and output ends match those of the detecting means and the camera respectively.

US-A-5' 142'372 discloses a three-dimensional optical imaging of semi-transparent and opaque objects using ultrashort light pulses, a streak camera and one single coherent fibre bundle. This fibre bundle is used to convert the 2-dimensional spatial image that is produced from a 3-dimensional object illuminated with an ultrashort laser pulse into a 1-dimensional line image which is fed into the input slit of the streak camera and then time resolved by the streak camera.

US-B-6'306'083 describes a fibre optic endoscope which uses a bundle of coherent fibres to transfer both an optical image in one direction and illumination light in the other direction. A fraction of the optical fibres are used for the illumination and others of the fibres are used for the imaging.

"Endoscopic hologram interferometry using fiber optics", Motoki Yonemura et al., Applied Optics, Vol. 20, No. 9, 1 May 1981, discloses the use of a fibre bundle as an illumination transmitter and the use of another fibre bundle as an image transmitter.

US-A-202/0027708 discloses a confocal microscope system comprising a single incoherent fiberoptic bundle which maps a line illumination pattern into a dispersible group of separate sources and then remaps this confocally selected remitted light to the original line. Fibres, not confocal with the illumination, carry light to be rejected from the image back on itself upon double passing, while separate fibres carry light from non-confocal sample planes. Unwanted photons are thereby rejected at a slit aperture.

The inventors of the herein described invention have found that the use of a combination or array of imaging fibre bundles for imaging measurement of electronic objects, such as Ball Grid Arrays (BGAs) or other high density electronic packages or interfaces has several advantages. This is described in "Characteristics of imaging fibre-bundles for use in an ESPI-based device for distributed high-resolution measurements", Erwin Hack et al., Proc. of SPIE Vol. 4933, 2003. This laboratory measurement system is based on electronic speckle pattern interferometry (ESPI) and is intended to measure deformation fields developed in such electronic objects under thermal load associated with production and normal use. This system or device uses a NIR (near infrared) laser diode source to illuminate the object to be measured and an array of these imaging fibre bundles to transfer the images of the individual solder balls to a detection or object plane of a CCD-camera.

By combining an arbitrary number of bundles into arbitrary geometries, distributed image areas can be composed into a single image. The user of such a system can therefore have distributed areas of interest of the object to be measured imaged into a single frame of the camera. This speeds up inspection and allows for easy comparison of quality indicators. The user is able to inspect multiple areas of interest without having any limitation imposed by the aspect ratio of the CCD-camera. This reference also describes the basic considerations to be made in order to find appropriate imaging fibre bundles.

### Summary of the invention

It is an object of the invention to provide a method for imaging measurement and an imaging measurement device which do not need a great deal of space and which can therefore be used for the measurement small devices in places where access is limited or difficult.

This object is achieved by a method for imaging measurement and an imaging measurement device with the features of claim 1 and claim 11 respectively.

The inventive method for imaging measurement comprises the steps of
- illuminating an object to be measured through a combination of imaging fibre bundles,
- transferring an optical image of said object through said combination of imaging fibre bundles from said object to at least one optical detection means and
- analyzing the optical image received in the at least one optical detection means, and it is characterized in that
the same fibre bundles are used for illuminating said object and transferring the optical image of said object.

The inventive imaging measurement device comprises at least one optical detection means and a combination of imaging fibre bundles for guiding illuminating light to an object to be measured and for transferring an optical image of said object to the at least one optical detection means, and it is characterized in that the device uses same fibre bundles for illuminating said object and transferring the optical image of said object.

No separate illumination means are needed and the size of the device can therefore be minimized. It is possible to measure objects or samples in-situ and under working conditions even in places where access is limited, since only one kind of optical fibres have to be brought near to the object. Furthermore, it is possible to measure different areas even of small objects at the same time or the same area from different angles.

It is a further advantage of the inventive method and device, that by reducing the number of fibre bundles needed for illumination and image transfer, the costs can be reduced as well. This advantage can particularly be achieved when each imaging fibre bundle of the array or combination of imaging fibre bundles is used for both illuminating and transferring.

In a preferred embodiment, a shutter is provided for selectively using the individual imaging fibre bundles.

In the preferred embodiments, the inventive method and device enable measurements of small objects with a spatial resolution of about 5 µm.

Additional preferred embodiments and variants of the invention are mentioned in the depending claims.

### Brief description of the drawings

The invention will now be described, by way of example, with reference to the accompanying drawings, in which
- Figure 1: illustrates a schematic view of the basic principle of the inventive device;
- Figure 2: an arrangement of the combination of the imaging fibre bundles according to a second embodiment of the invention and
- Figure 3: an arrangement of the combination of the imaging fibre bundles according to a third embodiment of the invention.

### Detailed description of preferred embodiments

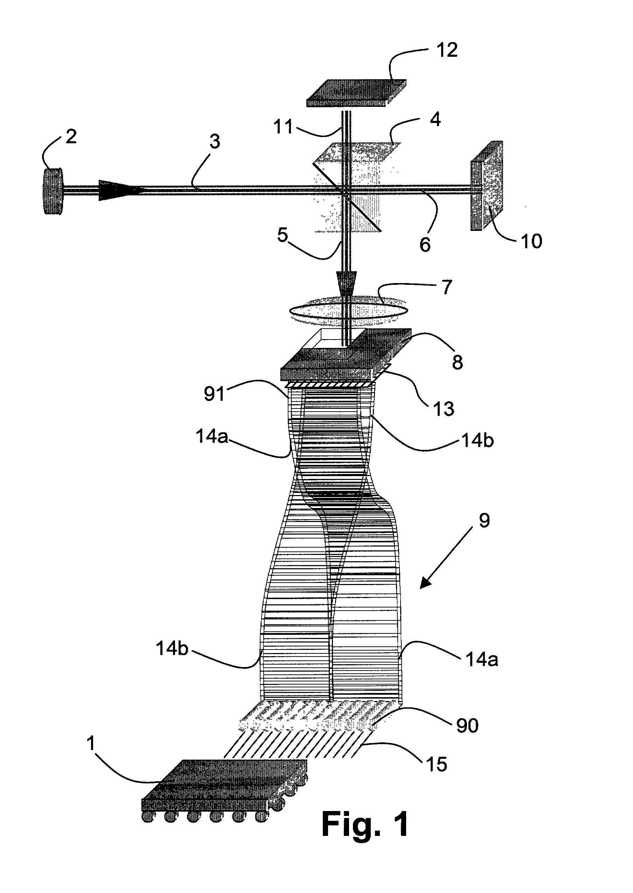

Figure 1 shows schematically the imaging measurement device according to the invention. An object to be measured, for example a small electronic device, is marked with the reference number 1.

A light source 2 , for example a continuous wave laser, sends a light beam 3 to a beam splitter 4. The beam splitter 4 splits the beam 3 into an illuminating beam 5 and a reference beam 6. The illuminating beam 5 passes if necessary through imaging optic means, such as at least one lens 7 and falls onto a shutter 8. The shutter 8 is preferably a liquid crystal shutter (LC-shutter). This shutter 8 works as an n-way switch.

Depending on the working position of the shutter 8, the illumination beam 6 is selectively coupled into one of a combination or array of imaging fibre bundles 9. It can also be coupled into a sub-combination of such fibres 9 only.

Such imaging fibre bundles 9 are well known in the state of the art. Each of these imaging fibre bundles 9 consists of an array of coherent optical fibres. In the inventive method and device, a combination of a multiple of such imaging fibre bundles are used. The imaging fibre bundles can be flexible, rigid, straight, formed or tapered.

Flexible bundles may preferably be used when the instrument is to be employed to measure different objects of varying sizes or geometries, when the bundle geometry may be conveniently adjusted and adapted to best suit the individual object shape and size.

Rigid bundles may preferably be used when the instrument is employed for repetitive measurement of objects of the same kind, shape and size, e.g. as a quality control measure for mass produced objects passing on a conveyor belt in an industrial environment. Preferably the fibre bundles should be composed of individual fibres which are as small as possible since the individual fibre size sets a lower limit to the spatial resolution which the instrument can achieve.

Preferably the fibre bundle should include extra mural absorption elements of dark material which absorb light scattered within the bundle, thus enhancing the quality of the transmitted image.

Preferably the materials of which the fibre bundle is made should offer the lowest possible transmission loss at the wavelength or wavelengths of light used for the illumination and observation beams.

Preferably the individual fibre bundles should be made to have a cross section of a shape which enables several bundles the be grouped in close proximity with maximum filling ratio for greatest efficiency (for example square or rectangular cross section), so that there is no unused space between them.

The imaging fibre bundles 9 transfer the illumination light to their object-sided ends 90 and therefore to the object 1. The illuminating light can be guided directly from the imaging fibre bundles 9 to the object 1. It is also possible to use illumination optic means between the bundle ends and the object. This illumination light is scattered or reflected from the object 1.

The scattered light and/or light which may be emitted by the object 1 itself is guided through the same imaging fibre bundles 9 back to their detection sided ends 91. The detection light leaving the detection-sided ends of the imaging fibre bundles is guided or imaged on a detection surface of at least one optical detection means 12, e.g. a CCD-camera. Preferably, this surface is a flat plane.

In the example shown, the detection light passes through the beam splitter 4 or another appropriate recombination optic. It is superposed with the reference beam 6 which had been reflected and phase shifted in a phase-retarder 10, preferably in a liquid crystal phase-retarder (LC-retarder). The combined light 11 falls on the CCD-camera 12.

It is emphasized, that depending on the detection method used and the geometry of the array of bundles 9, the optical image does not have to be a copy of the object itself but bears the information needed for the analysis and measurement of the object.

The geometry of the array or combination of the imaging fibre bundles 9 can be varied depending on the object 1 to be measured. Preferably, the combination or array is divided into sub-combinations or sub-arrays.

In figure 1, the combination consists of at least two, preferably more than two lines of imaging fibre bundles 9. The lines of bundles 9 form at their detection-sided ends 91 a rectangle. This imaginary rectangle is shown in figure 1 and has the reference number 13. Preferably, this rectangle 13 has the same aspect ratio as the active detection plane of the camera 12. The image of the rectangle 13 on the camera 12 has the same size as the sensor by virtue of the optical characteristics of the lens or imaging optic 7.

The object-sided ends 90 of the bundles 9 however can be arranged in a totally different way. In figure 1, only two of the multiple of lines are shown. However, it can be seen, that at the object-sided ends 90, they are arranged in a common line. An object or a part of the object of particular interest having a bigger or smaller size or different aspect ratio than the active detection plane of the camera 12 can therefore nevertheless be transferred onto the detection surface of the camera making full use of the available sensor area.

The method therefore comprises the steps of
- illuminating a first partial view of the object 1 through a first of the sub-combinations and transferring a first partial optical image of the first partial view to the at least one optical detection means 12,
- illuminating at least one second partial view of the object 1 through at least one second sub-combination of the sub-combinations and transferring at least one second partial optical image of the at least one second partial view to the at least one optical detection means 12 and
- combining the first and the at least one second optical image to a plane having at least approximately the same dimensions as the detection surface of the at least one optical detection means 12.

The shutter 8 is used to illuminate the different partial views of the object 1 at the same time or one after the other. Preferably, not only one second partial view is illuminated but more than two.

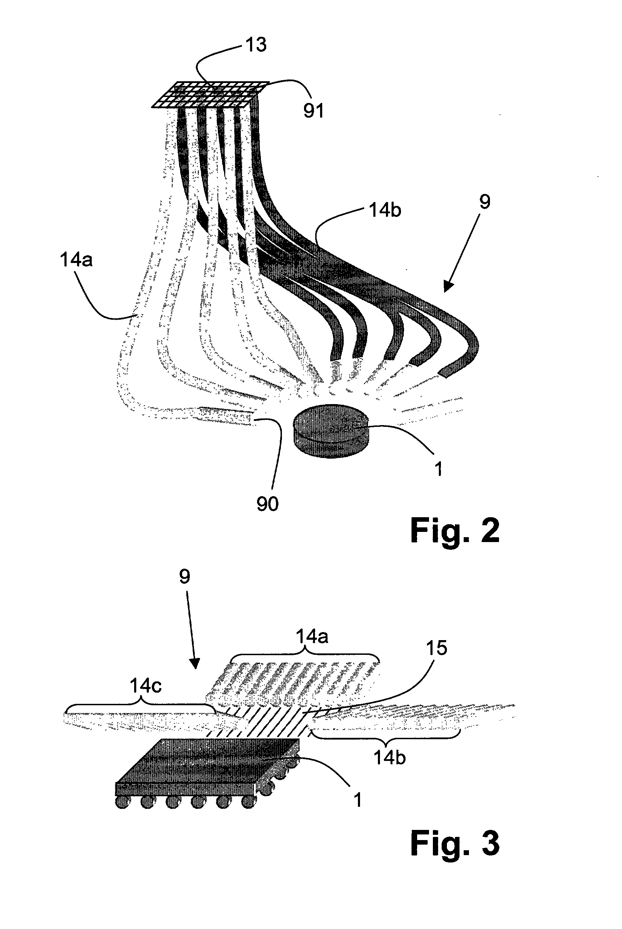

In the example according to figure 2, it is shown, that the object-sided ends of the bundles 9 can be arranged on different sides of the object 1 in order to obtain an optical image comprising different viewing directions on different or overlapping areas of the object. The object 1 does not have to be a round disk but can also have other geometries.

In the embodiment according to figure 3, sub-combinations 14a, 14b, 14c of the imaging fibre bundles 9 have different viewing or observation directions of overlapping areas of the object. This arrangement is a preferred arrangement for obtaining a 3-dimensional picture of the object 1.

When the embodiment is a speckle interferometric device, the sensitivity vector of each illuminating fibre bundle is directed parallel to the viewing and illuminating direction. Thereby the sensitivity vector direction is independent of the shape of the object which facilitates calibration of the device. If at least three different viewing directions of overlapping areas of the object are used, 3D-deformation measurements are possible. A representative sensitivity vector is shown in Figures 1 and 3 and marked with the reference number 15.

Other arrangements of the object-sided and the detection sided ends 90, 91 of the sub-combinations are possible too. The object-sided ends 90 of the fibre bundles 9 can be arranged in any appropriate way, i.e. in a plane, in a linear array, in a circle or in circles, piled up or in an appropriate arrangement around or partially around the object.

The arrangement of the detection-side ends 91 need not correspond to the arrangement of the object-sided ends 90. The information needed about the object can be obtained by electronically analyzing the data of the detection means as long as the kind of arrangement is known. This ensures a maximum flexibility in imaging measurement. This enables for example to adapt the aspect ratios of the detection means and the object.

Preferably, the sub-combinations of bundles 9 can be moved independently from each other. However, it is not necessary to move the bundles 9 relative to the object during the measurement.

A preferred variant of the inventive method therefore comprises the steps of
- illuminating a first view of the object 1 through a first of said sub-combinations and transferring a first partial optical image of the first view to the at least one optical detection means 12,
- illuminating at least one second view of said object through at least one second sub-combination of the sub-combinations and transferring at least one second partial optical image of the at least one second view to the at least one optical detection means 12 and
- rearranging the first and said at least one second optical image.

This rearrangement can be chosen depending on the information needed and/or the sizes of the object and the camera. It is for example possible to rearrange a linear array of areas of the object to a rectangular array of images or an array of peripheral images of the object to a rectangular array of images. It is also possible to rearrange a rectangular array of areas of the object to a rectangular array of images, wherein the two rectangles are different in their sizes and aspect ratios. In another rearrangement, at least two linear arrays of partial images of the object, taken from different observation directions, are changed into a rectangular array of images. It is also possible to compose distributed image areas into a single image.

This variant also enables measurement of portions of the object which can not directly be seen, e.g. by introducing sub-combinations of fibre bundles through holes in a structure or around obstacles that prevent a direct view.

Preferably, the inventive method and device use electronic speckle interferometry (ESPI). The arrangement described above is well suited for ESPI. However, other optical detection techniques can be used as well, such as holography or laser induced fluorescence.

The inventive method and device can be used with a coherent or incoherent light source illuminating the object 1 to be measured. A continuous wave laser (CW-laser) is preferred. However, a pulsed laser, x-ray, thermal radiation, fluorescence light or white light can be used as well. If electronic speckle interferometry (ESPI) or a holographic interferometry is used, the illuminating light is laser light.

Depending on the detection technique used, different kind of imaging optics, especially focusing optics, and/or optical elements for illuminating the object and/or for transferring the optical image to the detection means (such as the beam-splitter and the phase-retarder) are used or they are not necessary at all. The detection light can be superposed with a reference beam or it can be otherwise manipulated. For example, its polarization can be changed. The illumination wavelength and the detection wavelength can have but need not have the same wavelength.

The optical detection means 12 can be a CCD- or a CMOS-array, especially when ESPI is used. If holographic methods are used, a CCD- or a CMOS-array, a photographic film or plate is preferred.

This method and device enable the construction of small and rather inexpensive measurement devices. The method and device improves the flexibility in imaging measurement and they enable in-situ measurement even for small and hardly accessible objects.

### Reference numbers

- 1: object
- 2: light source
- 3: light beam
- 4: beam splitter
- 5: illuminating beam
- 6: reference beam
- 7: lens
- 8: shutter
- 9: imaging fibre bundles
- 10: phase-retarder
- 11: combined light
- 12: optical detection means
- 13: rectangle
- 14: sub-combination
- 15: representative sensitivity vector
- 90: object-sided end
- 91: detection-sided end

## Claims

1. A method for imaging measurement, the method comprising the steps of
- illuminating an object (1) to be measured through a combination of imaging fibre bundles (9) ,
- transferring an optical image of said object through said combination of imaging fibre bundles (9) from said object (1) to at least one optical detection means (12) and
- analyzing the optical image received in the at least one optical detection means (12) ,
**characterized in that**
the same fibre bundles (9) are used for illuminating said object (1) and transferring the optical image of said object (1).

2. The method of claim 1, further using each fibre bundle (9) of the combination for illuminating and transferring.

3. The method of claim 1 or 2, further comprising the steps of dividing the combination of the imaging fibre bundles (9) in sub-combinations (14a, 14b, 14c).

4. The method of claim 3, further comprising the steps of
- illuminating a first partial view of said object (1) through a first of said sub-combinations and transferring a first partial optical image of said first partial view to the at least one optical detection means (12),
- illuminating at least one second partial view of said object through at least one second sub-combination of said sub-combinations and transferring at least one second partial optical image of said at least one second partial view to the at least one optical detection means (12) and
- combining the first and the at least one second optical image to a plane (13) having at least approximately the same dimensions as a detection plane of the at least one optical detection means (12).

5. The method of claim 3, further using a first of said sub-combinations for measuring in a first observation direction and using at least one second of said sub-combinations for measuring in at least one second observation direction.

6. The method of claim 3, further comprising the steps of
- illuminating a first view of said object (1) through a first of said sub-combinations and transferring a first partial optical image of said first view to the at least one optical detection means (12),
- illuminating at least one second view of said object (1) through at least one second sub-combination of said sub-combinations and transferring at least one second partial optical image of said at least one second view to the at least one optical detection means (12) and
- rearranging said first and said at least one second optical image.

7. The method of claim 6, wherein the first and the at least one second partial optical image are rearranged to an optical image according to one of the group of: a linear array of areas of the object is rearranged to a rectangular array of images; an array of peripheral images of the object is rearranged to a rectangular array of images; a rectangular array of areas of the object is rearranged to a rectangular array of images , wherein the two rectangles are different in their sizes and aspect ratios; at least two linear arrays of partial images of the object, taken from different observation directions, are rearranged as a rectangular array of images.

8. The method of one of claims 1 to 7, wherein imaging fibre bundles (9) are used having a feature of one of the following group: flexible, rigid, straight, formed, tapered.

9. The method of one of claims 1 to 8, further comprising the steps of using additional optical elements for illuminating the object and/or for transferring the optical image to the at least one detection means.

10. The method of one of claims 1 to 9, further using said imaging bundles or sub-combinations thereof selectively.

11. An imaging measurement device for performing the method according to one of claims 1 to 10, the device comprising at least one optical detection means (12) and a combination of imaging fibre bundles (9) for guiding illuminating light to an object (1) to be measured and for transferring an optical image of said object (1) to the at least one optical detection means (12),
**characterized in that**
the device uses same fibre bundles (9) for illuminating said object (1) and transferring the optical image of said object (1).

12. The device according to claim 11, wherein the device comprises a shutter (8) for selectively using said imaging fibre bundles (9) or sub-combinations (14a, 14b, 14c) thereof.

13. The device according to one of claims 11 or 12, wherein the at least one optical detection means (12) is a CCD camera.

14. The device according to one of claims 11 to 13, wherein the device comprises a coherent or incoherent light source (2).

15. The device according to one of claims 11 to 14, wherein the combination of imaging fibre bundles (9) is divided in sub-combinations and wherein these sub-combinations are moveable independently from each other.

16. The device according to one of claims 11 to 15, wherein the device comprises
- at least one beam splitter (4) for dividing an illumination light beam before guiding a first partial beam of this split light beam through the imaging light bundles and a second partial beam through a reference beam path
- a phase retarder for retarding either the first or the second partial beam of this split light beam before combining this second partial beam with a third light beam comprising the optical image of the object.
